# EUROPÄISCHE PATENTSCHRIFT

(11) **EP 1 132 266 B1**
(45) Veröffentlichungstag und Bekanntmachung des Hinweises auf die Patenterteilung: **18.08.2004**
(21) Anmeldenummer: 01101572.4
(22) Anmeldetag: 25.01.2001
(51) Int. Cl.: B60R 22/20

(54) **Gurthöhenversteller eines Sicherheitsgurtsystems**
Belt height adjustment device for a safety belt system
Dispositif réglant en hauteur la ceinture d'un système de ceinture de sécurité

(30) Priorität: 11.03.2000 DE 10011906
(43) Veröffentlichungstag der Anmeldung: 12.09.2001
(73) Patentinhaber: Dr.Ing. h.c.F. Porsche Aktiengesellschaft, 70435 Stuttgart (DE)
(72) Erfinder: Dietrich, Günter, 71691 Freiberg (DE)

(56) Entgegenhaltungen:
- EP-A- 0 776 792
- DE-A- 3 229 724
- DE-A- 19 735 640
- US-A- 4 564 219
- US-A- 5 842 719

## Beschreibung

Die Erfindung bezieht sich auf einen Gurthöhenversteller eines Sicherheitsgurtsystems nach dem Oberbegriff des Anspruchs 1.

Aus der DE 295 19 483 U1 ist eine Vorrichtung für einen Gurthöhenversteller eines Sicherheitsgurtsystems in einem Kraftfahrzeug bekannt, der über eine Rastschiene unter Zwischenschaltung eines Deformationselements an einer Säule eines Fahrzeugaufbaus befestigt ist. Des weiteren ist aus der DE 43 41 119 A1 eine vormontierte Trägereinheit für Funktionsteile eines Sicherheitsgurtsystems bekannt, welche die Funktionsteile des Gurtssystems aufnimmt und insgesamt an einer Säule des Fahrzeugaufbaus befestigbar ist. Ferner ist aus der DE 196 51 092 A1 eine Sicherheitsgurtvorrichtung für ein Fahrzeug bekannt, die eine Ankerschiene für die Gurtvorrichtung bildet, welche über Schrauben mit einer Säulenwand des Fahrzeugaufbaus verbunden ist und die Schrauben in einem Aufprall - Absorptionselement gründen. Bei einer Aufprallsituation verformt sich dieses Element und nimmt plastisch Aufprallenergie auf. Aus der gattungsbildenden US-A-4,564,219 ist ein Gurthöhenversteller bekannt, der in eine Einbuchtung einer B-Säule des Fahrzeugaufbaus eingesetzt ist. Diese Mittelsäule wird durch ein Säuleninnen- sowie ein Säulenaußenpanele gebildet, welche miteinander verbunden sind und ein geschlossenes Profil bilden. Ein Umlenkbeschlag des Gurthöhenverstellers ist über einen Haltekörper mittels einer Schraube in der Mittelsäule gehalten.

Aufgabe der Erfindung ist es, einen Gurthöhenversteller eines Sicherheitsgurtsystems zu schaffen, der in einfacher Montage- und Demontageweise mit einer Fahrzeugsäule verbindbar und austauschbar ist. Des weiteren soll eine optimale Energieabsorption bei einem Kopfaufprall gewährleistet sein und eine Beschädigung der Säule bzw. der Trägerteile des Gurtsystems vermieden werden.

Diese Aufgabe wird erfindungsgemäß durch die Merkmale des Anspruchs 1 gelöst. Weitere vorteilhafte Merkmale beinhalten die Unteransprüche.

Die mit der Erfindung hauptsächlich erzielten Vorteile bestehen darin, daß durch die Anordnung des Deformationselements in einem Behältnis, die gesamte Baueinheit, im wesentlichen bestehend aus dem Deformationselement der Trägerplatte mit der Rastschiene und dem Gurthöhenversteller, als eine komplette Baueinheit in einem Ausschnitt einer Säule des Fahrzeugaufbaus einsetzbar ist. Auch ist hierdurch eine Montage- und Demontageweise in einfacher Weise schnell möglich. Die Anordnung des Behältnisses kann in der B- und/oder C-Säule erfolgen.

Damit eine Festlegung der Rastschiene an einer Aufbausäule in einfacher Weise erzielbar ist, wird diese über mindestens eine Schraube mit der Trägerplatte verbunden, welche wiederum im Behältnis an abgestellten Schenkeln oder dergleichen Abstellungen abgestützt wird. Das Behältnis wird über Schrauben mit einer Seitenwand, entweder in der A- oder B-Säule oder mit beiden Säulen der Aufbaustruktur verbunden. Hierdurch wird nach einem Kopfaufprall und einem deformierten Deformationselement ein Auswechseln der gesamten Einheit durch Abschrauben von der Fahrzeugsäule möglich.

Die Rastschiene ist an der Trägerplatte mittels mindestens einer Schraubverbindung und einer Einhakverbindung befestigt, so daß nur das Behältnis mit Deformationselement und der Trägerplatte ausgewechselt werden kann.

Die Trägerplatte weist eine Einhakverbindung am unteren Ende auf, die aus einem Längsschlitz bzw. aus zwei Längsschlitzen besteht, die mit mindestens einem vorragenden Haken bzw. zwei Haken am Steg der Rastschiene in Eingriff bringbar ist bzw. sind. Eine weitere Trägerplatte weist als Einhakverbindung am unteren Ende mindestens eine schlüssellochförmige Öffnung auf, in die mindestens ein Zapfen der Rastschiene in Eingriff bringbar ist. Diese verschiedenen Trägerplatten, auch Adapterplatten genannt, dienen dazu entweder einen mechanischen Gurthöhenversteller oder einen elektrischen Gurthöhenversteller einzusetzen.

Das Deformationselement kann verschiedenartig ausgebildet sein und besteht beispielsweise im vorliegenden Fall aus einem verformbaren Rippenkörper, dessen Stränge zur Trägerplatte etwa im rechten Winkel verlaufen und zueinander beabstandet sind und zwischen den Strängen horizontale Platten angeordnet sind, die mit den Strängen Hohlräume bilden. Es können aber auch andere Arten von Deformationselementen verwendet werden, wie beipielsweise Wabenkörper oder ähnliche Deformationskörper. Wesentlich ist nur, daß die beim Kopfaufprall entstehende Energie plastisch aufgenommen werden kann.

Das Behältnis wird über Schrauben mit der Aufbauwand der Säule verbunden. Darüber hinaus ist auch eine Schweißlösung möglich. In diesem Fall sind seitlich des Behältnis Befestigungswinkel vorgesehen, die mit dem Fahrzeugaufbau beziehungsweise einer Säulenwand des Fahrzeugaufbaus durch eine Schweißung verbunden wird.

Der Vorteil des Systems besteht auch darin, daß sowohl Zugkräfte als auch Druckkräfte aufgenommen werden.

Ein Ausführungsbeispiel der Erfindung ist in den Zeichnungen dargestellt und wird im folgenden näher beschrieben.

Es zeigen:
- Fig.1: eine schaubildliche Darstellung der einzelnen Bauteile der Vorrichtung für einen Gurthöhenversteller,
- Fig. 2: eine Ansicht auf ein Behältnis zur Aufnahme des Deformationselements mit Trägerplatte und Rastschiene,
- Fig. 3: einen Vertikalschnitt durch das Behältnis mit Deformationselement, Trägerplatte und Rastschiene,

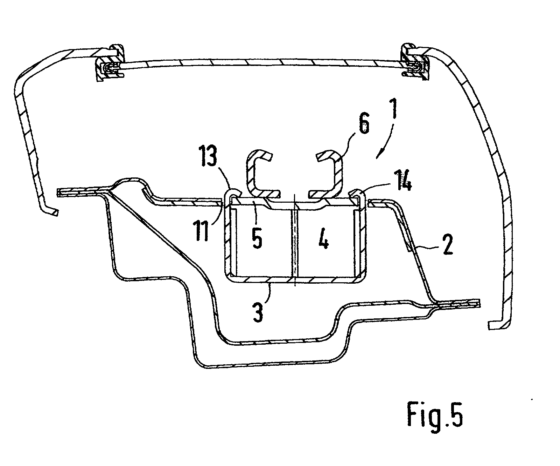

- Fig. 4 Fig. 5: eine Ansicht auf das Behältnis, wie Figur 2, aber mit einer Schweißverbindung zur Säule einen Horizontalschnitt durch eine Aufbausäule
- Fig. 6 bis 8: verschiedene Ausführungen von Deformationselementen
- Fig. 9: eine Trägerplatte mit einer aus Längsschlitzen bestehenden Einhakverbindung für die Rastschiene und
- Fig. 10: eine weitere Trägerplatte mit einer schlüsselförmigen Einhakverbindung für die Rastschiene

Die Vorrichtung 1 für einen Gurthöhenversteller eines Sicherheitsgurtssystems umfaßt ein in einer Aufbausäule 2 einsetzbares Behältnis 3, in dem ein Deformationselement 4; 4a; 4b und eine Trägerplatte 5; 5a angeordnet ist. Mit der Trägerplatte wird eine Rastschiene 6 für einen Gurthöhenversteller verbunden, der nicht näher gezeigt ist.

Das Behältnis 3 ist wannenförmig ausgebildet und über stirnseitige Abstellungen 7, 8 mittels Schrauben 9 an einer Säulenwand 10 befestigt. Diese Säulenwand 10 weist eine Ausnehmung 11 auf, in welche das Behältnis 3 eingesetzt wird.

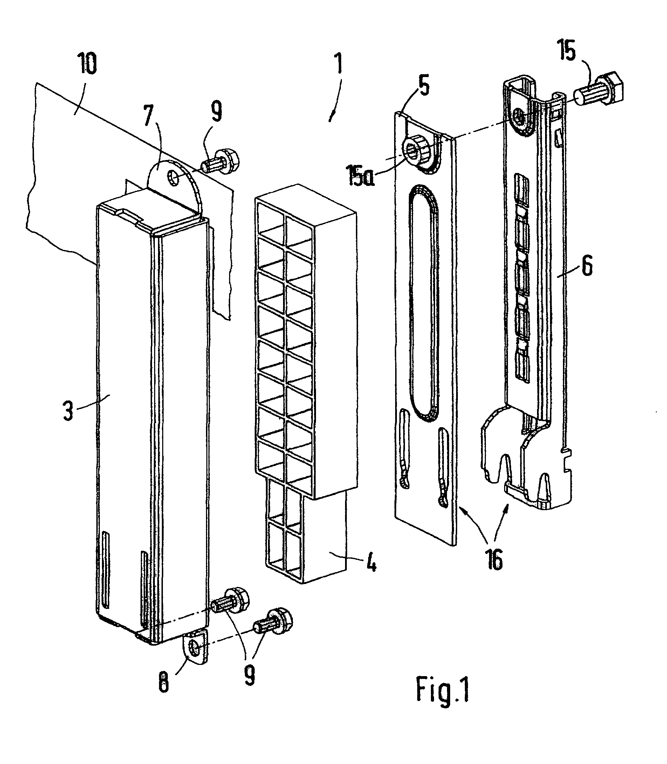

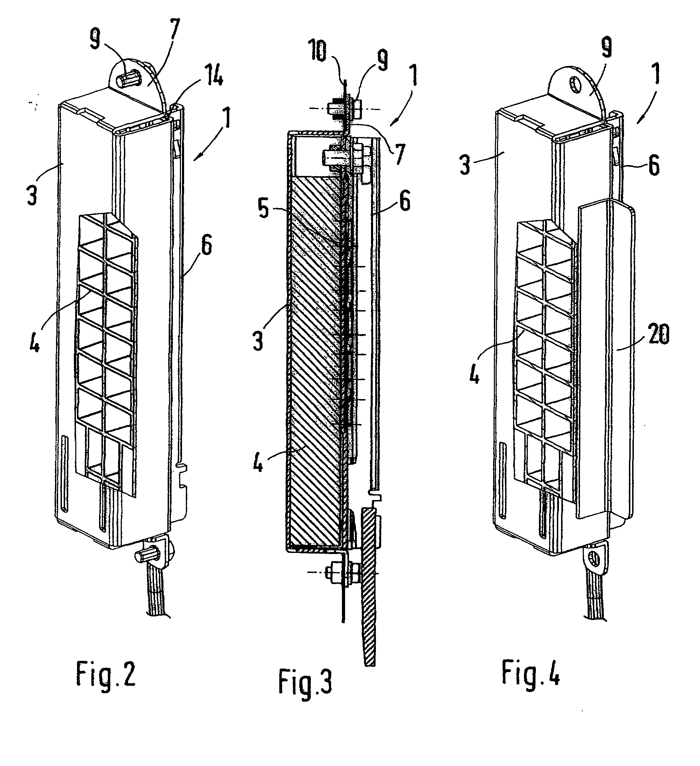

Wie in den Figuren 1 bis 4 näher dargestellt ist, stützt sich das Deformationselement 4 am Boden 12 des Behältnisses 3 ab und wird über die Trägerplatte 5 im Behältnis 3 gehalten. Hierzu ist diese Trägerplatte 5 über seitliche Abwinklungen 13 ,14 im Behältnis 3 gelagert.

Ein Festsetzen der Rastschiene 6 an der Trägerplatte 5;5a erfolgt über mindestens eine Schraube 15 und eine Einhakverbindung 16; 16a. Die Schraube 15 ist über eine Schweißmutter 15a mit der Trägerplatte 5 verbunden. Es können auch mehrere Verbindungsschrauben 15, eine am oberen Ende und eine weitere am unteren Ende der Rastschiene 6 vorgesehen sein, entweder mit oder ohne Einhakverbindung 16; 16a.

Die Trägerplatte 5; 5a und die Rastschiene 6 weisen eine der Öffnung des Behältnisses 3 entsprechende Breite und Länge auf, so daß ein Eintauchen ins Behältnis 3 bei einem Kopfaufprall möglich ist. Durch diese Anordnung und Verbindung der Rastschiene 6 mit der Trägerplatte 5; 5a wird sich bei einem Kopfaufprall die Trägerplatte 5; 5a mit der Rastschiene 6 unter Deformation des Deformationselements 4 in das Behältnis 3 bei Absorption von Aufprallenergie hineinbewegen. Hierbei soll erreicht werden, daß nur das Deformationselement 4 beschädigt wird und auszuwechseln ist.

Das Behältnis 3 kann statt über Schrauben 9 auch mittels einer Schweißung mit der Aufbausäule 2 verbunden werden. Hierzu sind am Behältnis 3 Winkelstücke 20 vorgesehen, die an der Säulenwand 10 befestigt werden.

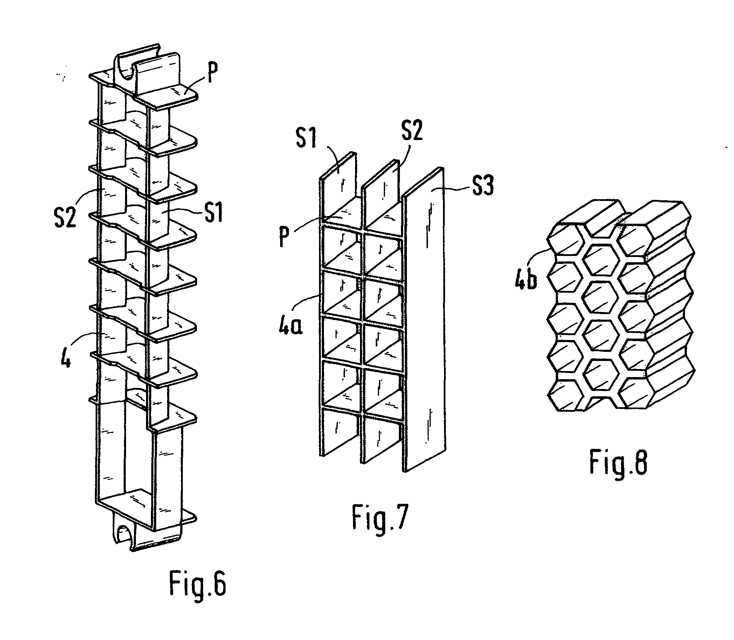

In den Figuren 6 bis 8 sind Deformationselemente 4; 4a; 4b in schematischer Darstellung gezeigt. Das Deformationselement 4 besteht aus einer Gitterstruktur mit seitlich durchgehenden vertikalen Strängen S1 und S2, zwischen denen horizontal ausgeführte Platten P angeordnet sind.

Das Deformationselement 4a zeigt eine Gitterstruktur mit mehr als zwei Strängen S1, S2 und S3, zwischen denen die horizontalen Platten P verlaufen. Das Deformationselement in Figur 8 zeigt eine Wabenstruktur.

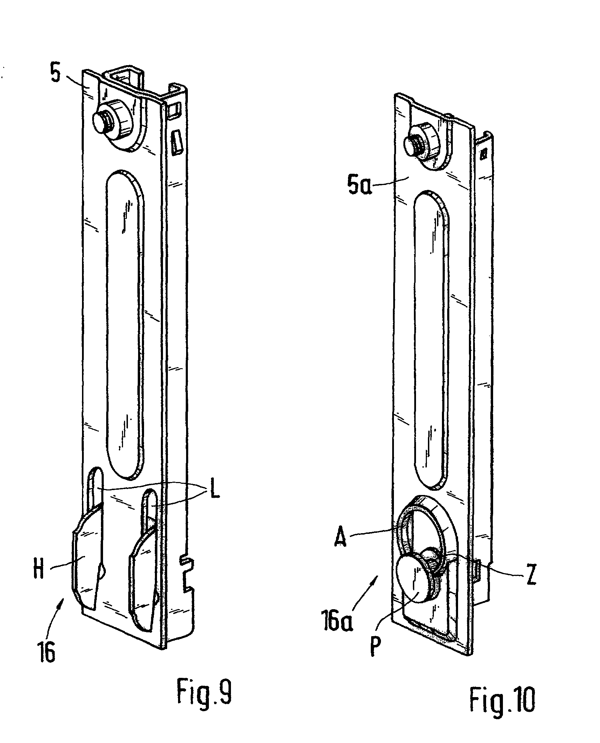

In den Figuren 9 und 10 sind die Trägerplatten 5 und 5a dargestellt, die bei der Vorrichtung 1 verwendbar sind. Sie weisen Einhakverbindungen 16 und 16a mit Längsschlitzen L und einer schlüsselförmigen Aufnahme A auf. Entsprechend sind die Haken 4 und der Zapfen Z an der Rastschiene 5; 5a ausgeführt.

Die Haken H greifen in die Schlitze L ein und verhaken sich in diesen. Der Zapfen Z besteht aus einem Grundzapfen, der endseitig von einer im Durchmesser größeren kreisförmigen Platte P abgeschlossen wird.

## Patentansprüche

1. Gurthöhenversteller für ein Sicherheitsgurtsystem, der in einer Fahrzeugaufbausäule (2) eines Fahrzeugs angeordnet ist und zwischen einer Rastschiene (6) des Gurtsystems und der Säule (2) ein Deformationselement (4; 4a; 4b) angeordnet ist, **dadurch gekennzeichnet, daß** das Deformationselement (4, 4a; 4b) des Gurthöhenverstellers in einem Behältnis (3) angeordnet und dieses in einem Ausschnitt (11) oder einer Vertiefung einer Säulenwand (10) einer Fahrzeugaufbausäule (2) über Schraubmittel (9) befestigbar ist und vorderseitig des Deformationselements (4; 4a; 4b) eine Trägerplatte (5; 5a) mit der verbundenen Rastschiene (6) angeordnet ist, die im Behältnis (3) gehalten wird.

2. Gurthöhenversteller nach Anspruch 1, **dadurch gekennzeichnet, daß** im Behältnis (3) die Trägerplatte (5; 5a) über nach innen ragende Abstellungen (13, 14) des Behältnisses (3) abgestützt gehalten wird und an der Trägerplatte (5; 5a) die Rastschiene (6) in mindestens einer Schweißmutter (15a) über mindestens eine Befestigungsschraube (15) festsetzbar ist und die Trägerplatte (5; 5a) in einer montierten Betriebsstellung anliegend an den Abstellungen (13, 14) des Behältnisses (3) und in einer Kopf - Aufprallstellung losgelöst von diesen Abstellungen (13, 14) des Behältnisses (3) angeordnet ist.

3. Gurthöhenversteller nach den Ansprüchen 1 oder 2, **dadurch gekennzeichnet, daß** das Deformationselement (4; 4a) aus einem plastisch verformbaren Rippenkörper besteht und Stränge S1, S2, S3 zur Trägerplatte (5; 5a) etwa im rechten Winkel verlaufen und zueinander beabstandet sind und zwischen diesen Strängen Platten P verlaufen, die mit den Strängen S1, S2, S3 Hohlräume bilden.

4. Gurthöhenversteller nach den Ansprüchen 1 oder 2, **dadurch gekennzeichnet, daß** die Trägerplatte 5 als Einhakverbindung 16 am unteren Ende mindestens einen Längsschlitz L aufweist, der mit mindestens einem vorragenden Haken H am Steg der Rastschiene 6 in Eingriff bringbar ist.

5. Gurthöhenversteller nach den Ansprüchen 1 oder 2, **dadurch gekennzeichnet, daß** die Trägerplatte (5a) als Einhakverbindung (16a) am unteren Ende mindestens eine schlüsselförmige Öffnung A aufweist, die mit mindestens einen Zapfen Z am Steg der Rastschiene (5a) in Eingriff bringbar ist und der Zapfen Z eine endseitige Rastplatte P aufweist.

6. Gurthöhenversteller nach Anspruch 1, **dadurch gekennzeichnet, daß** das Behältnis (3) an seinen seitlichen Schenkeln Befestigungswinkel (20) aufweist, die im Einbauzustand in Anlage mit einer Säulenwand (10) des Fahrzeugaufbaus stehen, um mit diesen über eine Schweißung verbindbar sind.

7. Gurthöhenversteller nach einem oder mehreren der vorhergehenden Ansprüche, **dadurch gekennzeichnet, daß** die Baueinheit, bestehend aus dem Behältnis (3), dem Deformationselement (4, 4a; 4b) der Trägerplatte (5; 5a) mit Rastschiene (6) und Gurthöhenversteller als eine komplette Baueinheit in eine Fahrzeugsäule montierbar ist.

## Claims

1. A belt height adjuster for a safety belt system, said adjuster being arranged in a bodywork pillar (2) of a vehicle and a deformation member (4; 4a; 4b) being arranged between a locking rail (6) of the belt system and the pillar (2), **characterised in that** the deformation member (4; 4a; 4b) of the belt height adjuster is arranged in a receptacle (3) fixable by screw means (9) in an opening (11) or a recess in a pillar wall (10) of a vehicle bodywork pillar (2), and on the front of the deformation member (4; 4a; 4b) is arranged a supporting plate (5; 5a) with the connected locking rail (6), said supporting plate (5; 5a) being held in the receptacle (3).

2. A belt height adjuster according to claim 1, **characterised in that** the supporting plate (5; 5a) is supported in the receptacle (3) by inwardly projecting stops (13, 14) of the receptacle (3), and the locking rail (6) is securable to the supporting plate (5; 5a) by at least one fixing bolt (15) in at least one weld nut (15a), and the supporting plate (5; 5a) rests against the stops (13, 14) of the receptacle (3) in a mounted operating position and is detached from these stops (13, 14) of the receptacle (3) in a front impact position.

3. A belt height adjuster according to claims 1 and 2, **characterised in that** the deformation member (4; 4a) comprises a plastically deformable ribbed body, and spaced strips S1, S2, S3 extend substantially at right angles to the supporting plate (5; 5a), and between these strips extend plates P which, together with the strips S1, S2, S3, form hollow spaces.

4. A belt height adjuster according to claims 1 and 2, **characterised in that** the supporting plate (5) has, at its lower end, at least one longitudinal slot L which can be brought into engagement with at least one projecting hook H on the web of the locking rail (6) so as to form a hooked connection (16).

5. A belt height adjuster according to claims 1 and 2, **characterised in that** the supporting plate (5a) has, at its lower end, at least one key-shaped opening A which can be brought into engagement with at least one pin Z on the web of the locking rail (5a [*sic* - 6]) so as to form a hooked connection (16a), and the pin Z has a stop plate P at its end.

6. A belt height adjuster according to claim 1, **characterised in that** the receptacle (3) is provided on its lateral sides with fixing brackets (20) which, in the mounted state, are in contact with a pillar wall (10) of the vehicle body and are connectable thereto by welding.

7. A belt height adjuster according to one or more of the preceding claims, **characterised in that** the structural unit comprising the receptacle (3), the deformation member (4; 4a; 4b) of the supporting plate (5; 5a) with the locking rail (6) and belt height adjuster is mountable as a complete structural unit into a vehicle pillar.

## Revendications

1. Dispositif de réglage de hauteur de ceinture pour un système de ceinture de sécurité, qui est placé dans un montant (2) de la carrosserie d'un véhicule, et dans lequel un élément de déformation (4 ; 4a ; 4b) est disposé entre un rail d'encliquetage (6) du système de ceinture et le montant (2), **caractérisé en ce que** l'élément de déformation (4 ; 4a ; 4b) du dispositif de réglage de hauteur de ceinture est disposé dans un récipient (3) et ce dernier peut être fixé dans une découpe (11) ou un renfoncement d'une paroi (10) d'un montant (2) de la carrosserie du véhicule par des moyens à vis (9), et sur la face avant de l'élément de déformation (4 ; 4a ; 4b) est disposée une plaque de support (5 ; 5a) avec le rail d'encliquetage (6) relié à celle-ci, qui est maintenue dans le récipient (3).

2. Dispositif de réglage de hauteur de ceinture selon la revendication 1, **caractérisé en ce que** dans le récipient (3), la plaque de support (5 ; 5a) est maintenue soutenue par des parties saillantes (13, 14), dirigées vers l'intérieur, du récipient (3), et le rail d'encliquetage (6) peut être fixé su la plaque de support (5 ; 5a), dans au moins un écrou soudé (15a), par au moins une vis de fixation (15), et la plaque de support (5 ; 5a) est disposée, en position de fonctionnement, de manière à s'appliquer contre les parties saillantes (13, 14) du récipient (3) et, en position de choc de la tête, de manière à être détachée de ces parties saillantes (13, 14) du récipient (3).

3. Dispositif de réglage de hauteur de ceinture selon la revendication 1 ou 2, **caractérisé en ce que** l'élément de déformation (4 ; 4a) est constitué d'un corps à ailettes déformable plastiquement et des cordons S1, S2, S3 s'étendent à peu près à angle droit par rapport à la plaque de support (5 ; 5a) et sont écartés les uns des autres et entre ces cordons s'étendent des plaques P qui forment des cavités avec les cordons S1, S2, S3.

4. Dispositif de réglage de hauteur de ceinture selon la revendication 1 ou 2, **caractérisé en ce que** la plaque de support (5) présente, comme liaison à accrochage (16), à son extrémité inférieure, au moins une fente longitudinale L qui peut être amenée en prise avec au moins un crochet H saillant sur l'âme du rail d'encliquetage (6).

5. Dispositif de réglage de hauteur de ceinture selon la revendication 1 ou 2, **caractérisé en ce que** la plaque de support (5) présente, à son extrémité inférieure, comme liaison à accrochage (16a), au moins une ouverture A en forme de trou de serrure qui peut être amenée en prise avec au moins un tenon Z sur l'âme du rail d'encliquetage (5a), et le tenon Z comporte une plaque d'encliquetage P à une extrémité.

6. Dispositif de réglage de hauteur de ceinture selon la revendication 1, **caractérisé en ce que** le récipient (3) comporte, sur ses côtés, des cornières de fixation (20) qui, à l'état monté, sont en contact avec une paroi de montant (10) de la carrosserie du véhicule qui peut ainsi être assemblée à celles-ci, par une soudure.

7. Dispositif de réglage de hauteur de ceinture selon une ou plusieurs des revendications précédentes, **caractérisé en ce que** l'ensemble, constitué du récipient (3), de l'élément de déformation (4, 4a ; 4b) de la plaque de support (5 ; 5a) avec rail d'encliquetage (6) et dispositif de réglage de hauteur de ceinture peut être monté comme ensemble complet dans un montant du véhicule.
